Europäisches Patentamt

European Patent Office

Office européen des brevets

(19)

(11) Numéro de publication : **0 185 582**
**B1**

(12) **FASCICULE DE BREVET EUROPÉEN**

(45) Date de publication du fascicule du brevet :
26.04.89

(21) Numéro de dépôt : 85402374.4

(22) Date de dépôt : 02.12.85

(51) Int. Cl.⁴ : **G 01 J 9/02, G 01 D 5/26**

(54) Capteur interférométrique à fibre optique.

(30) Priorité : 03.12.84 FR 8418398

(43) Date de publication de la demande :
25.06.86 Bulletin 86/26

(45) Mention de la délivrance du brevet :
26.04.89 Bulletin 89/17

(84) Etats contractants désignés :
AT BE CH DE GB IT LI LU NL SE

(56) Documents cités :
GB-A- 2 136 956
OPTICS COMMUNICATIONS, vol. 39, no. 1,2, 15 septembre 1981, pages 7-10, North-Holland Publishing Co., Amsterdam, NL; M. IMAI et al.: "High-sensitive all-fiber Michelson interferometer by use of differential output configuration"
APPLIED PHYSICS LETTERS, vol. 41, no. 3, 1er août 1982, pages 231-233, American Institute of Physics; J.E. BOWERS: "Fiber-optical sensor for surface acoustic waves"
LASER FOCUS, vol. 18, no. 2, février 1982, pages 112-115, Newton, Mass., US; C.M. DAVIS: "An introduction to fiberoptic sensors"

(73) Titulaire : **ELECTRICITE DE FRANCE Service National
2, rue Louis Murat
F-75008 Paris (FR)**

(72) Inventeur : **Ferdinand, Pierre
17 rue de Strasbourg
F-78800 Houilles (FR)**

(74) Mandataire : **Polus, Camille et al
c/o Cabinet Lavoix 2, Place d'Estienne d'Orves
F-75441 Paris Cedex 09 (FR)**

## Description

La présente invention concerne un capteur interférométrique à fibre optique.

On a déjà décrit des capteurs interférométriques à fibre optique et notamment des capteurs utilisant un interféromètre de Mach-Zehnder (G. B. Hocker Appl. Opt., 18, 1445, 1979 ; G. L. Clark et coll., SPIE 92 Interferometry 1979 ; T. Musha et coll., Appl. Opt., 21, 694, 1982). Dans ces capteurs au moins le bras de mesure est constitué par une fibre optique et est sensible à la variation de grandeurs extérieures telles que température, pression, contrainte. Ces capteurs présentent des avantages :
- isolation électrique
- insensibilité aux parasites électromagnétiques
- résistance à la corrosion, aux radiations
- une faible masse et un faible poids
- une grande sensibilité
- une grande bande passante,...

Ces capteurs se caractérisent toutefois par une immobilité du bras de mesure.

D'autres solutions ont aussi été proposées. Le document GB 2 136 956 décrit un interféromètre à fibre optique qui comprend deux fibres optiques et un ou deux coupleurs pour celles-ci. L'agencement de ces fibres et coupleurs est tel que jamais ces deux coupleurs ne relient simultanément ces deux fibres et que la branche de référence est parcourue deux fois, dans des sens opposés ce qui présente des inconvénients.

L'article de J. E. BOWERS, publié dans Applied Physic Letters 41 (3)-Août 1982, propose un capteur interférométrique à fibre optique pour mettre en évidence des ondes acoustiques de surface. Ce capteur comprend deux fibres optiques et deux coupleurs pour celles-ci. L'un des bras est utilisé comme ligne à retard et est associé à un modulateur de phase et à un polariseur. Ce détecteur fait appel notamment à la réflexion diffuse sur l'échantillon de mesure et à un laser fonctionnant par impulsions et ne vise qu'une application très spécifique pratiquement pas transposable.

La présente invention vise à remédier à cet inconvénient en fournissant un capteur interférométrique à fibre optique dont le bras de mesure est déplaçable.

La présente invention a ainsi pour objet un capteur interférométrique à fibre optique, du type comprenant une source laser, un interféromètre dont les bras sont formés de fibres optiques, l'un de ces bras comprenant une cellule de mesure, et un détecteur à la sortie de l'interféromètre,
- un premier coupleur séparant l'onde émise par la source laser en deux, caractérisé en ce qu'il comprend :
- un bras de référence à fibre optique transmettant une des parties de l'onde à un deuxième coupleur,
- un bras de mesure à fibre optique comprenant au moins une cellule de mesure et parcouru par l'autre partie de l'onde ce bras de mesure étant terminé par une surface réfléchissante qui renvoie une onde réfléchie vers le premier coupleur,
- un bras de renvoi à fibre optique associé au premier coupleur recevant et transmettant l'une des parties de l'onde réfléchie par le bras de mesure depuis le premier coupleur vers le second coupleur,
- ainsi qu'un détecteur sur lequel interfère l'onde transmise par le bras de renvoi de l'onde transmise par le bras de référence.

Pour éviter les problèmes qui peuvent être dus au retour d'une onde vers le laser, on dispose avantageusement un isolateur optique entre la source laser et le premier coupleur pour empêcher le retour d'une partie de l'onde réfléchie vers la source laser. L'isolateur optique peut être du type décrit par P. Ferdinand dans Opto 82 p. 63 ESI publications.

La source laser peut être un laser à gaz ou une diode laser continue ou pulsée.

Les coupleurs utilisés dont le premier fonctionne en fait en séparateur peuvent être constitués par des lames de verre, des cubes séparateurs des wollastons ou des coupleurs à fibres du type poli ou fusionné. Des coupleurs à fibres de type poli ont été décrits par Hervé Lefrère dans Contribution à la gyrométrie à fibre optique de classe inertielle Thèse d'Etat Université de Nice, 1982, et par Michel Digonnet et H. J. Shaw dans Wavelength multiplexing in single mode fiber couplers, Applied Optics/Vol. 22 n°3/1 February 83, et des coupleurs de type fusionné ont été décrits par Jacques Bures Suzanne Lacroix Christian Veilleux et Jean Lapierre dans Some particular of monomode fused fiber couplers Applied Optics/Vol. 23 n°7/1 April 84. Les bras de mesure et de référence sont réalisés avec des fibres optiques de type multimode (diamètre interne d'environ 10 à 300 μm) ou de type monomode (diamètre interne d'environ 3 à 6 μm).

Le bras de mesure déplaçable peut comprendre une ou plusieurs cellules de mesure ponctuelle sur la fibre optique qui peuvent être constituées par une ou plusieurs parties de la fibre optique elle-même. Le bras de mesure peut également être conçu de façon à fournir une mesure intégrée le long de la fibre optique.

La mesure peut concerner tous les paramètres qui influent sur l'indice de la fibre optique et sur sa longueur et notamment la température la pression, les déplacements, les contraintes, le champ électromagnétique.

La surface réfléchissante peut être un miroir distinct ou être formée en bout de fibre par un dépôt de couches métalliques ou de couches minces.

Le détecteur peut être une photodiode PIN ou à avalanche, un tube photomultiplicateur ou tout autre dispositif donnant une sensibilité suffisante.

Le signal détecté peut être l'intensité mais également la polarisation, la fréquence ou la phase.

Ce signal peut ensuite être traité par un dispositif électronique de traitement de l'information.

Des dispositifs de détection sont décrits par H. Z. Cummins et H. L. Swinney dans Ligh beating spectroscopy Process in Optics Vol. VIII — Editor E. Wolf 1970.

L'invention sera exposé, plus en détail à l'aide d'un dessin représentant seulement un mode d'exécution.

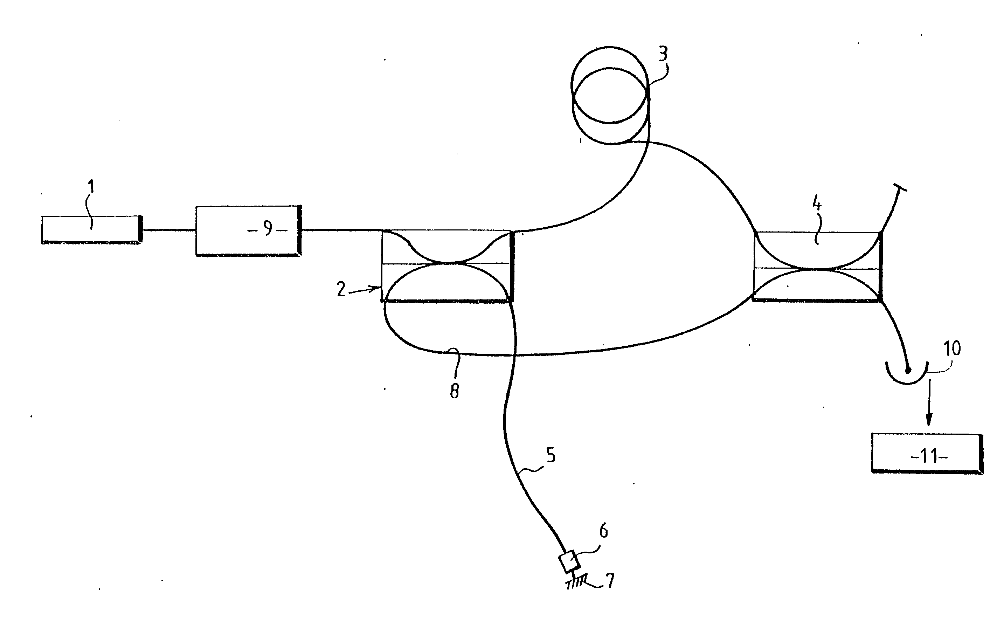

Sur ce dessin la figure unique est un schéma d'un capteur selon l'invention.

Dans le capteur représenté sur la figure unique une source laser 1 émet une onde qui se sépare en deux dans un coupleur 2 par exemple du type a fibre optique, fonctionnant en séparateur.

Un bras de référence 3 en fibre optique transmet une des parties de l'onde séparée à un autre coupleur 4.

L'autre partie de l'onde séparée par le coupleur 2 est transmise à un bras de mesure déplaçable 5 comportant une cellule de mesure 6.

Le bras de mesure 5 est terminé par un miroir 7 qui renvoie une onde réfléchie vers le coupleur 2.

Un bras de renvoi à fibre optique 8 renvoie une partie de l'onde réfléchie depuis le coupleur 2 vers le coupleur 4, tandis que l'autre partie de l'onde réfléchie est renvoyée vers la source laser 1. Un isolateur optique 9 est interposé entre la source laser 1 et le coupleur 2 pour empêcher le retour de l'onde réfléchie vers la source laser 1.

L'onde transmise par le bras de renvoi 8 et l'onde transmise par le bras de référence 3 interfèrent sur un détecteur 10 couplé à un dispositif de traitement de l'information 11.

Si par exemple la cellule 6 est une cellule sensible à la température le capteur étant sensible aux différences de trajet optique entre le bras de référence 3 et le bras de mesure 5 et si l'on place le bras de référence 3 dans une enceinte à température connue, il sera possible de déterminer la différence de température entre la température de l'enceinte et la température de l'endroit où l'on a placé la cellule de mesure 6.

## Revendications

1. Capteur interférométrique à fibre optique du type comprenant une source laser, un interféromètre dont les bras sont formés de fibres optiques, l'un de ces bras comprenant une cellule de mesure, et un détecteur à la sortie de l'interféromètre,
- un premier coupleur séparant l'onde émise par la source laser en deux, caractérisé en ce qu'il comprend :
- un bras de référence (3) à fibre optique transmettant une des parties de l'onde à un deuxième coupleur (4),
- un bras de mesure (5) à fibre optique comprenant au moins une cellule de mesure (6) et parcouru par l'autre partie de l'onde, ce bras de mesure (5) étant terminé par une surface réfléchissante (7) qui renvoie une onde réfléchie vers le premier coupleur (2),

- un bras de renvoi (8) à fibre optique associé au premier coupleur (2) recevant et transmettant l'une des parties de l'onde réfléchie par le bras de mesure (5) depuis le premier coupleur (2) vers le second coupleur (4),
- ainsi qu'un détecteur (10) sur lequel interfère l'onde transmise par le bras de renvoi (8) et l'onde transmise par le bras de référence (3).

2. Capteur selon la revendication 1, caractérisé en ce qu'un isolateur optique (9) est disposé entre la source laser (1) et le premier coupleur (2).

3. Capteur selon la revendication 1, caractérisé en ce que les coupleurs (2, 4) sont des coupleurs à fibres.

## Claims

1. Interferometric sensor using optical fibres, of the type comprising a laser source, an interferometer the arms of which are formed by optical fibres, one of these arms comprising a measuring cell, and a detector at the output of the interferometer, a first coupler dividing the wave emitted by the laser source into two, characterized in that it comprises a fibre-optical reference arm (3) transmitting one part of the wave to a second coupler (4), a fibre-optical measuring arm (5) comprising at least one measuring cell (6), and having the other part of the wave passing through it, this measuring arm (5) terminating in a reflective surface (7) which sends a reflected wave back to the first coupler (2), a fibre-optical returning arm (8) associated with the first coupler (2) receiving and transmitting one of the parts of the wave reflected by the measuring arm (5) from the first coupler (2) to the second coupler (4), and a detector (10) at which the wave transmitted hy the returning arm (8) and the wave transmitted by the reference arm (3) interfere.

2. Sensor according to claim 1, characterized in that an optical insulator (9) is arranged hetween the laser source (1) and the first coupler (2).

3. Sensor according to claim 1, characterized in that the couplers (2, 4) are fibre couplers.

## Patentansprüche

1. Interferometrischer Fühler mit optischer Faser, mit einer Laserquelle, einem Interferometer, dessen Arme aus optischen Fasern bestehen, wobei einer der Arme eine Messzelle enthält, einem am Ausgang des Interferometers angeordneten Detektor und mit einem ersten Koppler zur Zweiteilung des von der Laserquelle emittierten Strahls, dadurch gekennzeichnet, daß der Fühler aufweist :
- einen Referenzarm (3) mit optischen Fasern, welcher einen Teil der Welle an einen zweiten Koppler (4) überträgt,
- einen Messarm (5) mit optischen Fasern, der aus mindestens einer Messzelle (6) besteht und von dem anderen Teil der Welle durchlaufen wird, wobei der Messarm (5) an seinem Ende von einer reflektierenden Fläche (7) begrenzt wird, die eine reflektierte Welle zu dem ersten Koppler (2) zurück-kleitet,

- einen mit dem ersten Koppler (2) verbundenen Rückleitarm (8) mit optischen Fasern, welcher einen der von dem Messarm (5) reflektierten Teile der Welle empfängt und über den ersten Koppler (2) zum zweiten Koppler (4) leitet,

- sowie einen Detektor (10) an dem die vom Rückleitarm (8) übermittelte Welle und die vom Referenzarm (3) übermittelte Welle interferieren.

2. Fühler nach Anspruch 1, dadurch gekennzeichnet, daß ein optischer Isolator (9) zwischen der Laserquelle (1) und dem ersten Koppler (2) angeordnet ist.

3. Fühler nach Anspruch 1, dadurch gekennzeichnet, daß die Koppler (2, 4) Koppler mit Fasern sind.